Europäisches Patentamt

European Patent Office

Office européen des brevets

(11) Veröffentlichungsnummer: **0 400 304**
**A1**

## (12) EUROPÄISCHE PATENTANMELDUNG

(21) Anmeldenummer: 90106709.0

(22) Anmeldetag: 07.04.90

(51) Int. Cl.⁵: **A01K 1/01, A01K 31/04, A01B 33/02**

(30) Priorität: **01.06.89 DE 3917872**

(43) Veröffentlichungstag der Anmeldung:
**05.12.90 Patentblatt 90/49**

(84) Benannte Vertragsstaaten:
**AT BE CH DE DK ES FR GB IT LI NL SE**

(71) Anmelder: **von der Heide, Hans**
**Ibbenbürener Strasse 17**
**D-4530 Ibbenbüren 2- Laggenbeck(DE)**

(72) Erfinder: **von der Heide, Hans**
**Ibbenbürener Strasse 17**
**D-4530 Ibbenbüren 2- Laggenbeck(DE)**

(74) Vertreter: **Patentanwälte Schulze Horn und**
**Hoffmeister**
**Goldstrasse 36**
**D-4400 Münster(DE)**

(54) Verfahren zum Reiningen von Stallungen und Vorrichtung zur Durchführung dieses Verfahrens.

(57) Bei einem Verfahren zum Reinigen von Stallungen, bei dem mit Hilfe einer rotierenden, horizontal gelagerten und mit Auflockerungswerkzeugen (9) versehenen Walze (2) Schmutz- und Dungmassen od. dgl. angehoben und anschließend von einer ein Gebläse (3) aufweisenden Fördereinrichtung aufgesaugt und einem Sammelbehälter zugeführt werden, wird eine sichere und gründliche Reinigung ohne Verstopfungen der Fördereinrichtung durch sich absetzende Schmutz- und Dungmassen od. dgl. dadurch erreicht, daß die Schmutz- und Dungmassen od. dgl. beim Aufheben zerkleinert werden.

Fig. 1

## Verfahren zum Reinigen von Stallungen und Vorrichtung zur Durchführung dieses Verfahrens

Die Erfindung betrifft ein Verfahren zum Reinigen von Stallungen, insbesondere von Pferdeställen, bei dem mit Hilfe einer rotierenden, horizontal gelagerten und mit Auflockerungswerkzeugen versehenen Walze Schmutz- und Dungmassen od. dgl. angehoben und anschließend von einer ein Gebläse aufweisenden Fördereinrichtung aufgesaugt und einem Sammelbehälter zugeführt werden, - und eine Vorrichtung zur Durchführung dieses Verfahrens.

Bei dem aus der DE 30 18 723 A1 bzw. der DE 30 33 397 A1 bekannten Verfahren zum Reinigen von Stallungen, von dem die Erfindung ausgeht, werden die Schmutz- und Dungmassen od. dgl. zunächst vom Stallboden angehoben, indem eine horizontal gelagerte und rotierende Walze derart über den Stallboden verfahren wird, daß auf der Walze angeordnete Auflockerungswerkzeuge in die - oft trockenen und festgetretenen -Schmutz- und Dungmassen od. dgl. eingreifen und diese vom Stallboden lösen. Mittels einer pneumatischen Fördereinrichtung werden dann die gelockerten Schmutz- und Dungmassen od. dgl. aufgesaugt und zu einem Sammelbehälter gefördert.

Das eingangs genannte und zuvor näher beschriebene Verfahren ist in zweierlei Hinsicht nachteilig: Zum einen kommt es oft nur zur unvollständigen Anhebung der zu beseitigenden Reste, da Schmutz und Dung von Stroh- und Heufasern durchsetzt sind und daher teilweise sehr fest am Stallboden haften oder aber mehrere Schichten bilden, von denen nur die oberen von den Auflockerungswerkzeugen erfaßt werden. Zum anderen kommt es immer wieder zu Verstopfungen durch sich absetzende Schmutzund Dungmassen od. dgl. im Förderweg. Zeit- und kostenintensive Reinigungs- bzw. Wartungsarbeiten sind erforderlich, oftmals muß das Reinigungsverfahren wiederholt werden, um die gewünschte Sauberkeit des Stallbodens zu erreichen.

Der vorliegenden Erfindung liegt daher die Aufgabe zugrunde, das eingangs beschriebene Verfahren zum Reinigen von Stallungen so auszugestalten und weiterzubilden, daß eine sichere und gründliche Reinigung ohne die zuvor genannten Nachteile erreicht wird.

Das erfindungsgemäße Verfahren, bei dem die zuvor aufgezeigte Aufgabe gelöst ist, ist zunächst und im wesentlichen dadurch gekennzeichnet, daß die Schmutz- und Dungmassen od. dgl. beim Aufheben zerkleinert werden. Mit Hilfe der erfindungsgemäß vorgesehenen Zerkleinerung während des Aufhebevorganges wird erreicht, daß auch größere zusammenhängende Schmutz- und Dungmassen od. dgl. zuverlässig vom Ansaugstrom der pneumatischen Fördereinrichtung aufgenommen werden, da sie bereits beim Auflockern in eine Vielzahl kleiner und nicht mehr zusammenhängender Stükke zerteilt werden.

Das erfindungsgemäße Verfahren erlaubt außerdem eine sichere und zuverlässige pneumatische Förderung, da im Dünnstromverfahren gearbeitet werden kann, d. h., das Verhältnis von Fördergut zu Luft ist sehr klein. Auf diese Weise "schwimmt" das abzufördernde Gut im Luftstrom und es kann mit hohen Fördergeschwindigkeiten gearbeitet werden. Mit dem erfindungsgemäßen Verfahren werden Verstopfungen der Förderleitung sicher vermieden und können auch längere Förderwege zurückgelegt werden.

Im einzelnen gibt es nun verschiedene Möglichkeiten, das erfindungsgemäße Verfahren zu gestalten und weiterzubilden, was im folgenden nur beispielhaft erläutert werden soll.

Bisher ist immer davon gesprochen worden, daß mit einer rotierenden Walze gearbeitet wird. Selbstverständlich ist es jedoch möglich, das erfindungsgemäße Verfahren zum Reinigen von Stallungen auch mit mehreren Walzen gleichzeitig durchzuführen.

Gegenstand der Erfindung ist auch eine Vorrichtung zur Durchführung des zuvor beschriebenen Verfahrens, wobei die Walze und das Gebläse an einem fahrbaren Rahmen mit zwei Antriebsrädern angeordnet sind und die Vorrichtung erfindungsgemäß dadurch gekennzeichnet ist, daß neben den Antriebsrädern noch mindestens ein weiteres Rad vorgesehen ist. Dabei dient das weitere Rad bzw. dienen die weiteren Räder zur Abstützung, so daß zur Durchführung des erfindungsgemäßen Verfahrens sich die Walze stets in einem definierten Abstand zum Stallboden befindet.

Bei dem erfindungsgemäßen Verfahren ist es auch denkbar, daß die Gebläseschaufeln die aufgesaugten Schmutz- und Dungmassen od. dgl. noch weiter zerkleinern.

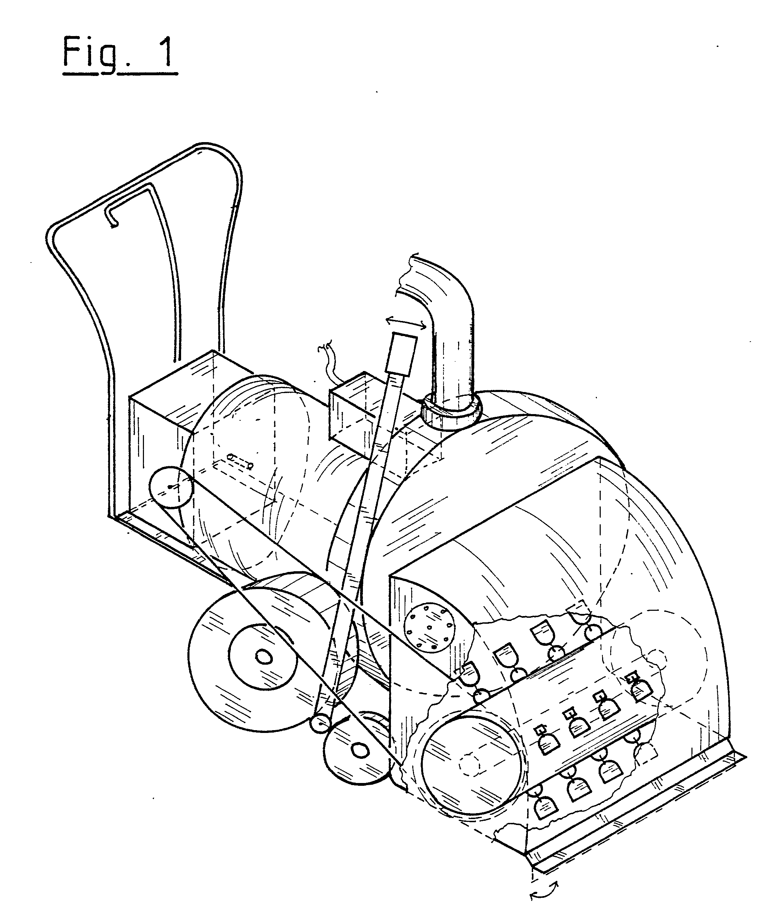

Im folgenden wird nun die Erfindung anhand einer lediglich ein Ausführungsbeispiel darstellenden Zeichnung, insbesondere auch in bezug auf die erfindungsgemäße Vorrichtung, näher erläutert: die einzige Figur zeigt ein Ausführungsbeispiel einer erfindungsgemäßen Vorrichtung zur Durchführung des erfindungsgemäßen Verfahrens in perspektivischer Darstellung.

Die in der einzigen Figur dargestellte Vorrichtung zur Durchführung des erfindungsgemäßen Verfahrens weist zunächst einen fahrbaren Rahmen 1 auf, an dem im wesentlichen eine horizontal gelagerte und mit Auflockerungswerkzeugen versehene Walze 2, ein Gebläse 3 und ein Motor 4 angeordnet sind. Zum Verfahren des Rahmens 1 dienen einerseits zwei Antriebsräder 5 und - nach einer wesentlichen Lehre der Erfindung - andererseits mindestens ein weiteres Rad. Im dargestellten Ausführungsbeispiel weist die erfindungsgemäße Vorrichtung zwei zusätzliche, als Stützräder 6 ausgeführte Räder auf. Weiterhin ist an dem Rahmen 1 ein Hydromotor 7 zum Antrieb der Antriebsräder 5 vorgesehen, der in vorteilhafter Weise gemeinsam mit der Walze 2 und dem Gebläse 3 von dem einzigen Motor 4 angetrieben wird. Im dargestellten und insoweit bevorzugten Ausführungsbeispiel ist angedeutet, daß der Motor 4 als Elektromotor ausgebildet ist, jedoch ist es auch möglich, einen Verbrennungsmotor vorzusehen, wobei dann die entstehenden Abgase - zweckmäßigerweise über das Gebläse 3 - abgesaugt werden müssen, da die erfindungsgemäße Vorrichtung zum Einsatz in geschlossenen Stallungen vorgesehen ist. In jedem Fall ist es vorteilhaft, wenn der Motor 4 in mehreren umschaltbaren Leistungsstufen betreibbar ist.

Nach einer besonderen Lehre der Erfindung ist der - bevorzugt - als Elektromotor ausgeführte Motor 4 so aufgebaut, daß seine im einzelnen nicht dargestellte Welle durch sein Gehäuse verlängert ist. Auf diese Weise ist eine besonders gute Ausnutzung des vorhandenen Raumes möglich, wie weiter unten im einzelnen erläutert werden wird.

Im Zusammenhang mit den bereits aufgezeigten Stützrädern, 6 ist erfindungsgemäß erreicht worden, daß der Rahmen 1 stets in einer bestimmten Höhe über den Stallboden verfahren werden kann. Für einen universellen Einsatz der erfindungsgemäßen Vorrichtung ist es zweckmäßig, daß die Walze 2 höhenverstellbar am fahrbaren Rahmen 1 angebracht ist. Je nach Beschaffenheit des Stallbodens kann die Walze 2 so tief abgesenkt werden, daß ihre Auflockerungswerkzeuge den Stallbo den gerade noch nicht berühren. In der Zeichnung ist schematisch dargestellt, daß die Höhenverstellung der Walze 2 zweckmäßigerweise über einen Bedienhebel 8 erfolgt, der so ausgeführt ist, daß er von der Bedienperson der erfindungsgemäßen Vorrichtung leicht und im Stehen verstellt werden kann. Um die Walze 2 in der gewünschten Höhe zu arretieren, sind für sich bekannte und daher nicht dargestellte Rasteinrichtungen vorgesehen.

Nach einer weiteren und besonders bedeutsamen Lehre der Erfindung weist die Walze 2 als Schlagwerkzeuge ausgeführte Auflockerungswerkzeuge auf. Die Schlagwerkzeuge dienen erfindungsgemäß zum Zerkleinern der zu beseitigenden Schmutzund Dungmassen od. dgl. während des Aufhebevorgangs. Eine besonders gute Zerkleinerung wird erreicht, wenn die Schlagwerkzeuge Schlaghämmer 9 aufweisen, die gelenkig auf der Walze befestigt sind. Dazu dienen im dargestellten und insofern bevorzugten Ausführungsbeispiel an der Walze 2 fest angeordnete Ösen. Die Schlaghämmer 9 werden beim Umlauf der Walze 2 durch Fliehkräfte radial ausgerichtet, das zu zerkleinernde Gut wird hauptsächlich durch Prall und Schlag beansprucht. Durch die gelenkige Anordnung der Schlaghämmer 9 wird beim Auftreffen auf einen harten, feststehenden Gegenstand ein "Nachgeben" eines Schlagwerkzeuges erreicht. Dadurch werden Beschädigungen sowohl der Schlagwerkzeuge selbst als auch der Lager der Walze 2 weitgehend vermieden.

Aus der Zeichnung geht ferner hervor, daß die Breite der Walze 2 größer ist als die Spurbreite der Antriebsräder 5 und der Stützräder 6. Dies ist besonders zweckmäßig, da so ein Reinigungsverfahren möglich ist, bei dem alle Räder stets über den bereits gereinigten Stallboden verfahren werden. Nur dann kann von einem definierten Abstand zwischen der Walze 2 und dem Stallboden gesprochen werden.

Die Walze 2 ist nach oben hin von einer sich zum Gebläse 3 hin öffnenden Leitschürze 11 umgeben. Diese Leitschürze 11 hat zum einen die Aufgabe, das zerkleinerte Gut dem Gebläse 3 zuzuführen, andererseits dient es zum Schutze vor radial zur Walze 2 beschleunigten harten Gegenständen, wie z. B. von den Schlaghämmern 9 getroffenen Steinchen oder Holzstücken. Um diese Schutzfunktion auch für die unterschiedlichen Höheneinstellungen der Walze 2 stets zu gewährleisten, ist vorne an der Leitschürze 11 eine beweglich angelenkte Schutzklappe 12 vorgesehen, die die Leitschürze 11 stets bis zum Stallboden bzw. bis zu den aufzunehmenden Schmutz- und Dungmassen od. dgl. verlängert. Weiterhin weist die Leitschürze 11 in der Größe veränderbare Luftschlitze zum Ansaugen von Außenluft auf, in der einzigen Figur sind diese Luftschlitze durch Bohrungen in der Luftschürze 11 und einer davor drehbar angebrachten Lochscheibe 13 ausgeführt. Eine "Verdünnung" der unter der Leitschürze 11 angesaugten Luft mit Außenluft begünstigt das bereits genannte Dünnstromverfahren zur pneumatischen Förderung.

Da gemäß dem erfindungsgemäßen Verfahren eine Zerkleinerung der am Stallboden befindlichen Schmutz- und Dungmassen od. dgl. mittels einer Rotation der Walze 2 erfolgt, wird die Walze 2, wie bereits erwähnt, vom Motor 4 angetrieben. Dabei ist es besonders zweckmäßig, daß der Antrieb der Walze 2 über einen Treibriemen 14 erfolgt. Nicht dargestellt ist, daß der Treibriemen 14 unmittelbar von der Welle des Motors 4 angetrieben und an geeigneter Stelle umgelenkt wird.

Das Gebläse 3 ist nach einer weiteren Lehre der Erfindung geräuschgedämpft ausgebildet. Die Menge des vom Gebläse erzeugten Luftstromes ist einstellbar, so kann den jeweiligen Gegebenheiten - Förderlänge, Förderhöhe, Menge und Gewicht des Fördergutes - bestmöglich Rechnung getragen werden. Besonders zweckmäßig ist es, wenn das Schaufelrad des Gebläses 3 unmittelbar auf der Welle des Motors 4 angeordnet ist. Vom Gebläse 3 geht eine Förderleitung 15 aus, die vorzugsweise aus flexiblen Schläuchen und/oder Rohrleitungen besteht. Das Fördergut wird über die Förderleitung 15 einem nicht dargestellten zentralen Sammelhälter zugeführt. Zur Reduzierung des Gesamtgewichts der erfindungsgemäßen Vorrichtung ist es auch vorstellbar, das Gebläse nicht auf den fahrbaren Rahmen, sondern ortsfest im Stallbereich anzuordnen.

Wie bereits erwähnt, werden die Antriebsräder 5 von einem Hydromotor 7 angetrieben. Zur optimalen Ausnutzung des vorhandenen Raumes wird der Hydromotor 7 unmittelbar von der Welle des Motors 4 derart angetrieben, daß die durch das Gehäuse verlängerte Welle mit der Pumpe des Hydromotors 7 verbunden ist. Auf diese Weise ist es möglich, eine besonders klein bauende Reinigungsvorrichtung zu erhalten, bei der der Schwerpunkt zwischen den Radachsen der Antriebsräder 5 und der Stützräder 6 liegt, so daß ein Umkippen des fahrbaren Rahmens sicher vermieden wird und daher die Walze 2 stets in einem definierten Abstand zum Stallboden verfahren werden kann.

Die einzige Figur zeigt weiter, daß zur Führung des fahrbaren Rahmens ein Handgriff 16 vorgesehen ist, in dessen Nähe ein Fahrhebel 17 zum Einschalten und Wählen der Fahrtrichtung des Hydromotorantriebes angeordnet ist. Darüber hinaus ist es denkbar, daß der fahrbare Rahmen mit einer nicht dargestellten Lenkeinrichtung ausgestattet ist, die beispielsweise über eine Verschwenkung der Stützräder erfolgen könnte. Schließlich ist es vorstellbar - besonders für den Einsatz in größeren Stallungen -, die erfindungsgemäße Vorrichtung als Selbstfahrer auszubilden.

Die Anordnung der Leitschürze 11 des Gebläses 3 und der Walze 2 sowie deren Drehsinn sind vorzugsweise so ausgewählt, daß die von der Walze aufgehobenen Partikel in die insbesondere zentrisch angeordnete Ansaugöffnung des Gebläses 3 abgeworfen werden.

**Ansprüche**

1. Verfahren zum Reinigen von Stallungen, bei dem mit Hilfe einer rotierenden, horizontal gelagerten und mit Auflockerungswerkzeugen versehenen Walze Schmutz- und Dungmassen od. dgl. angehoben und anschließend von einer ein Gebläse aufweisenden Fördereinrichtung aufgesaugt und einem Sammelbehälter zugeführt werden, dadurch gekennzeichnet, daß die Schmutz- und Dungmassen od. dgl. beim Aufheben zerkleinert werden.

2. Verfahren nach Anspruch 1, dadurch gekennzeichnet, daß die Walze (2) im wesentlichen in einem konstanten Abstand zum Stallboden verfahren wird.

3. Verfahren nach Anspruch 1 oder 2, dadurch gekennzeichnet, daß die aufgenommenen Schmutz- und Dungmassen od. dgl. von den Gebläseschaufeln weiter zerkleinert werden.

4. Verfahren nach einem der Ansprüche 1 bis 3, dadurch gekennzeichnet, daß die mittels der Walze aufgehobenen Partikel in die Ansaugöffnung des Gebläses abgeworfen werden.

5. Vorrichtung zur Durchführung des Verfahrens nach einem der Ansprüche 1 bis 4, bei der die Walze und das Gebläse an einem fahrbaren Rahmen mit Rädern angeordnet sind, dadurch gekennzeichnet, daß die Walze (2) mit kombinierten Auflockerungs- und Zerkleinerungswerkzeugen ausgestattet ist.

6. Vorrichtung nach Anspruch 4, dadurch gekennzeichnet, daß mindestens zwei Achsen für mindestens drei Räder vorgesehen sind.

7. Vorrichtung nach Anspruch 5 oder 6, dadurch gekennzeichnet, daß die Walze (2), das Gebläse (3) und Antriebsräder (5) von einem einzigen Motor (4) angetrieben werden.

8. Vorrichtung nach einem der Ansprüche 5 bis 7, dadurch gekennzeichnet, daß der Motor (4) mehrere umschaltbare Leistungsstufen aufweist.

9. Vorrichtung nach einem der Ansprüche 5 bis 8, dadurch gekennzeichnet, daß der Motor (4) eine durch sein Gehäuse verlängerte Welle aufweist.

10. Vorrichtung nach einem der Ansprüche 5 bis 9, dadurch gekennzeichnet, daß die Walze (2) höhenverstellbar am fahrbaren Rahmen (1) angebracht ist.

11. Vorrichtung nach Anspruch 10, dadurch gekennzeichnet, daß zur Höhenverstellung der Walze (2) ein Bedienhebel (8) vorgesehen ist.

12. Vorrichtung nach einem der Ansprüche 5 bis 11, dadurch gekennzeichnet, daß die Walze (2) als Schlagwerkzeuge ausgeführte Auflockerungswerkzeuge aufweist.

13. Vorrichtung nach Anspruch 12, dadurch gekennzeichnet, daß die Schlagwerkzeuge Schlaghämmer (9) aufweisen.

14. Vorrichtung nach Anspruch 13, dadurch gekennzeichnet, daß die Schlaghämmer (9) gelenkig an auf der Walze (2) fest angeordneten Ösen (10) angeordnet sind.

15. Vorrichtung nach einem der Ansprüche 5 bis 14, dadurch gekennzeichnet, daß die Breite der Walze (2) größer ist als die Spurbreite der Antriebsräder (5).

16. Vorrichtung nach einem der Ansprüche 5 bis 15, dadurch gekennzeichnet, daß die Walze (2) nach oben hin von einer sich zum Gebläse (3) hin öffnenden Leitschürze (11) umgeben ist.

17. Vorrichtung nach Anspruch 16, dadurch gekennzeichnet, daß vorn an der Leitschürze (11) eine Schutzklappe (12) beweglich angeordnet ist.

18. Vorrichtung nach Anspruch 16 oder 17, dadurch gekennzeichnet, daß die Leitschürze (11) in der Größe veränderbare Luftschlitze zum Ansaugen von Außenluft aufweist.

19. Vorrichtung nach einem der Ansprüche 5 bis 18, dadurch gekennzeichnet, daß der Antrieb der Walze (2) über einen Treibriemen (14) erfolgt.

20. Vorrichtung nach Anspruch 19, dadurch gekennzeichnet, daß der Treibriemen (14) unmittelbar von der Welle des Motors (4) angetrieben wird.

21. Vorrichtung nach einem der Ansprüche 5 bis 20, dadurch gekennzeichnet, daß das Gebläse (3) geräuschgedämpft ausgebildet ist.

22. Vorrichtung nach einem der Ansprüche 5 bis 21, dadurch gekennzeichnet, daß die Menge des vom Gebläse (3) erzeugten Luftstroms einstellbar ist.

23. Vorrichtung nach einem der Ansprüche 5 bis 22, dadurch gekennzeichnet, daß das Gebläse (3) ein Schaufelrad aufweist und das Schaufelrad unmittelbar auf der Welle des Motors (4) angeordnet ist.

24. Vorrichtung nach einem der Ansprüche 5 bis 23, dadurch gekennzeichnet, daß die Antriebsräder (5) von einem Hydromotor (7) angetrieben werden.

25. Vorrichtung nach Anspruch 24, dadurch gekennzeichnet, daß die Pumpe des Hydromotors (7) unmittelbar von der Welle des Motors (4) angetrieben wird.

26. Vorrichtung nach einem der Ansprüche 5 bis 25, dadurch gekennzeichnet, daß der Schwerpunkt der Vorrichtung zwischen den Radachsen der Antriebsräder (5) und des mindestens einen weiteren Rades liegt.

27. Vorrichtung nach einem der Ansprüche 5 bis 26, dadurch gekennzeichnet, daß der fahrbare Rahmen mit einer Lenkeinrichtung ausgestattet ist.

28. Vorrichtung nach Anspruch 27, dadurch gekennzeichnet, daß der fahrbare Rahmen als Selbstfahrer ausgebildet ist.

29. Vorrichtung nach einem der Ansprüche 5 bis 28, dadurch gekennzeichnet, daß die Drehachsen der Walze (2) und des Gebläses (3) im, insbesondere rechten, Winkel zueinander angeordnet sind.

30. Vorrichtung nach einem der Ansprüche 5 bis 29, dadurch gekennzeichnet, daß das Gebläse eine im wesentlichen koaxial angeordnete Ansaugöffnung aufweist.

# Fig. 1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | US-A-4708294 (ENDOM) <br> * Spalte 5, Zeilen 1 - 37; Figuren 1-6 * | 1, 2, 4, 5, 12-14, 19, 20 | A01K1/01 <br> A01K31/04 <br> A01B33/02 |
| | --- | | |
| Y,D | DE-A-3018723 (STRAUTMANN) <br> * Seite 5, letzter Absatz - Seite 6, Zeile 1; Figuren 1-5 * | 1, 2, 4, 5, 12-14, 19, 20 | |
| | --- | | |
| A | CA-A-578032 (MOEN) <br> * Spalte 4, Zeile 40 - Spalte 5, Zeile 30; Figuren 1-3 * | 1, 2, 5-6, 10, 15, 16, 19, 27-30 | |
| | --- | | |
| A | US-A-3680166 (DYRENG) <br> * Zusammenfassung; Figuren 1, 2, 8 * | 7, 24, 25 | |
| | --- | | |
| A,D | DE-A-3033397 (STRAUTMANN) | | |
| | --- | | |
| A | CA-A-1195704 (SWANSON) | | **RECHERCHIERTE SACHGEBIETE (Int. Cl.5)** |
| | ----- | | A01K <br> A01B |

Der vorliegende Recherchenbericht wurde für alle Patentansprüche erstellt

| Recherchenort | Abschlußdatum der Recherche | Prüfer |
|---|---|---|
| DEN HAAG | 30 AUGUST 1990 | VON ARX V.U. |